# EUROPEAN PATENT APPLICATION

(11) **EP 2 632 041 A1**
(43) Date of publication of application: **28.08.2013**
(21) Application number: 11833994.4
(22) Date of filing: 09.09.2011
(51) Int. Cl.: H02P 6/06, F04D 27/00, H02P 6/18

(54) **INVERTER CONTROL DEVICE, ELECTRIC COMPRESSOR, AND ELECTRIC DEVICE**

(30) Priority: 21.10.2010 JP 2010236162
(71) Applicant: Panasonic Corporation, Osaka 571-8501 (JP)
(72) Inventor: KODA, Atsushi, Osaka 540-6207 (JP); OGAHARA, Hideharu, Osaka 540-6207 (JP)
(74) Representative: Eisenführ, Speiser & Partner
(86) International application number: PCT/JP2011/005071
(87) International publication number: WO 2012/053148

(57) **Abstract**

An inverter control device of the present invention operates by synchronous commutation in which a commutation signal waveform is output with an electric angle of less than 180 degrees at a predetermined frequency according to a target rotation speed of a brushless DC motor. In order to maintain an induced voltage phase of a brushless DC motor at a predetermined phase with respect to an output voltage of an inverter circuit unit, even in an operation by the synchronous commutation, the output voltage of the inverter circuit unit is changed according to a change in state of the induced voltage phase of the brushless DC motor to continue a running state of the motor. Therefore, a more stable motor operation can be performed during synchronous running by the forced commutation.

## Description

### TECHNICAL FIELD

The present invention relates to an inverter control device for a brushless DC motor, and an electric compressor and an electric instrument in which the inverter control device is used.

### BACKGROUND ART

Conventionally, in control of this kind of inverter control device, a rotating magnetic field is generate by switching an energization phase of a three-phase winding of a stator, namely, by performing a commutation operation according to a rotor magnetic pole position of a brushless DC motor, whereby a rotor obtains an output torque. Accordingly, during running of the brushless DC motor, it is necessary to obtain a relative relationship between a rotor magnetic flux and a magnetic flux generated by a stator winding current.

In a motor in which such a sensor as a Hall element is used, because the rotor magnetic pole position can correctly be recognized by the sensor, it is not necessary to sense the rotor magnetic pole position using an indirect induced voltage. The rotor magnetic pole position can directly be determined from the sensor, so that the motor can easily be controlled.

However, such the sensor as the Hall element is hardly implanted in a hermetic type compressor from the viewpoints of a sensor breakdown due to a breakdown, reliability such as a refrigerant leakage, and maintenance of a built-in sensor motor in the breakdown. Accordingly, a sensorless type inverter control device is generally used. In the sensorless type inverter control device, such the sensor as the Hall element is not used, but the rotor magnetic pole position is sensed using the induced voltage generated in the stator winding.

In waveform control of the inverter control device, a 120-degree energization waveform is frequently used as a control waveform. In a system that drives the brushless DC motor, each phase switch of the inverter is energized during a period of an electric angle of 120 degrees, and the control is not performed during the remaining period of the electric angle of 60 degrees. In this case, using the uncontrolled period of the electric angle of 60 degrees, the induced voltage that emerges at a motor terminal is observed during a period during which upper and lower arm switches are turned off, thereby sensing the rotor magnetic pole position.

Nowadays, a brushless DC motor having a magnet implanted structure is frequency used (for example, see PTL 1). In the magnet implanted structure, a permanent magnet is implanted in the rotor in order to achieve high efficiency of the motor, not only the torque due to the magnet but also the torque due to reluctance are generated to increase the generated torque as a whole without increasing the motor current.

The conventional inverter control device will be described below with reference to the drawings.

FIG. 4 is a view illustrating a configuration of the conventional inverter control device disclosed in PTL 1. FIG. 5 is a timing chart illustrating a signal waveform and processing content of each unit of the inverter control device.

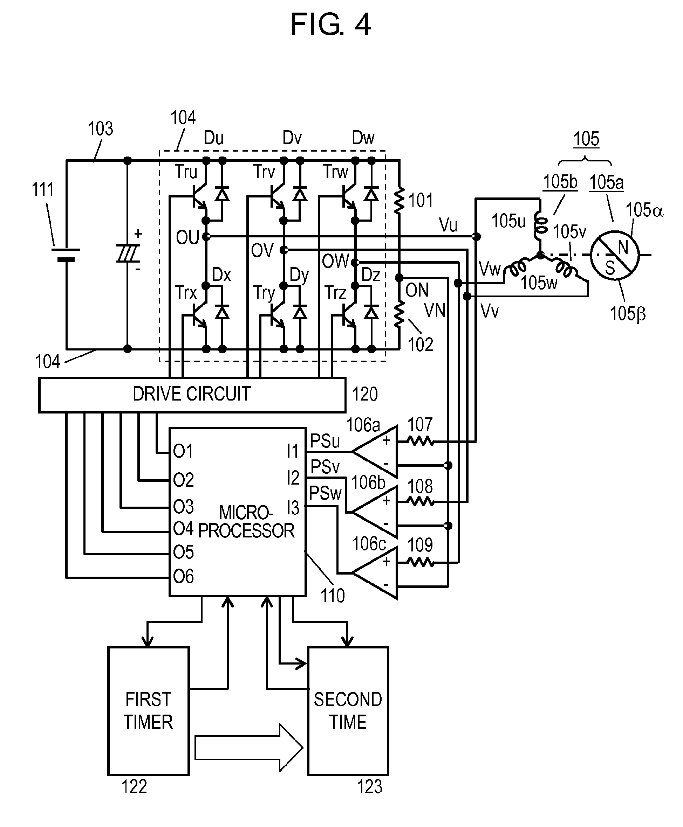

Referring to FIG. 4, three pairs of switching transistors Tru, Trx, Trv, Try, Trw, and Trz, are connected in series with one another between terminals of DC power supply 111 to form inverter circuit unit 104. Brushless DC motor 105 includes stator 105b having a four-pole distributed winding structure and rotor 105a. Rotor 105a has a magnet implanted structure in which permanent magnets 105α and 105ß are implanted in rotor 105a.

A connection point of each pair of switching transistors is connected to a terminal of each of stator windings 105u, 105v, and 105w of Y-connected phases of brushless DC motor 105.

Each of protective free-wheeling diodes Du, Dx, Dv, Dy, Dw, and Dz is connected between emitter and collector terminals of each of switching transistors Tru, Trx, Trv, Try, Trw, and Trz.

Resistors 101 and 102 are connected in series between bus bars 103 and 104. Detection terminal ON that is of a common connection point of resistors 101 and 102 outputs voltage VN at a virtual neutral point, which is of 1/2 of a voltage at DC power supply 111 and corresponds to a voltage at a neutral point of stator windings 105u, 105v, and 105w of brushless DC motor 105.

In comparators 106a, 106b, and 106c, non-inverting input terminals (+) are connected to output terminals OU, OV, and OW of the switching transistors through resistors 107, 108, and 109, respectively, and inverting input terminals (-) are connected to detection terminal ON.

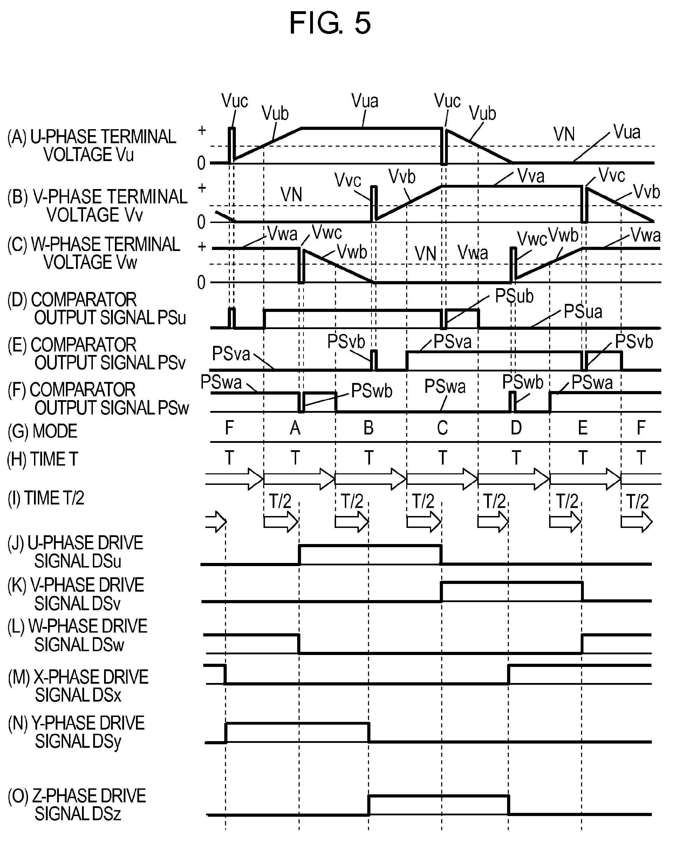

Output terminals of comparators 106a, 106b, and 106c are connected to input terminals I1, I2, and I3 of microprocessor 110 that is of logic means. Output terminals O1 to 06 of microprocessor 110 drive switching transistors Thru, Trx, Trv, Try, Trw, and Trz through drive circuit 120. A control operation will be described below with reference to FIG. 5.

In FIG. 5, parts (A), (B), and (C) illustrate terminal voltages Vu, Vv, and Vw of stator windings 105u, 105v, and 105w during a steady operation.

Terminal voltages Vu, Vv, and Vw become composite waves of supply voltages Vua, Vva, and Vwa of inverter circuit unit 104, induced voltages Vub, Vvb, and Vwb generated in stator windings 105u, 105v, and 105w, and pulsed spike voltages Vuc, Vvc, and Vwc generated by energizing one of diodes Du, Dx, Dv, Dy, Dw, and Dz of inverter circuit unit 104 during switching of commutation. Parts (D), (E), and (F) illustrate output signals PSu, PSv, and PSw in which comparators 106a, 106b, and 106c compare terminal voltages Vu, Vv, and Vw to virtual neutral point voltage VN that is of 1/2 of the voltage of DC power supply 111, respectively.

In this case, output signals PSu, PSv, and PSw of comparators 106a, 106b, and 106c include signals PSua, PSva, and PSwa that indicate positive or negative and phases of induced voltages Vub, Vvb, and Vwb and signals PSub, PSvb, and PSwb corresponding to pulsed voltages Vuc, Vvc, and Vwc.

Because pulsed voltages Vuc, Vvc, and Vwc are ignored by a wait timer, output signals PSu, PSv, and PSw of comparators 106a, 106b, and 106c indicate the positive and negative and phases of induced voltages Vub, Vvb, and Vwb.

Microprocessor 110 recognizes six modes A to F in part (G) based on states of output signals PSu, PSv, and PSw of comparators 106a, 106b, and 106c, and outputs drive signals DSu (part J) to DSz (part O) while delaying drive signals DSu to DSz by the electric angle of 30 degrees from time points at which levels of output signals PSu, PSv, and PSw change.

Times T (part H) of modes A to F indicate the electric angle of 60 degrees. A time (part I) of 1/2 of each of modes A to F, namely, T/2 indicates a delay time corresponding to the electric angle of 30 degrees.

Thus, according to rotation of rotor 105a of brushless DC motor 105, the position state of rotor 105a is detected from the induced voltages generated in stator windings 105u, 105v, and 105w. The time T for which the induced voltage changes is detected, and a drive signal that energizes stator windings 105u, 105v, and 105w of the phases is determined and performed by the energization mode and timing of stator windings 105u, 105v, and 105w.

However, in the conventional configuration disclosed in PTL 1, because the position is detected using the induced voltage, a commutation operation of the inverter circuit is restricted to a range where the induced voltage can be detected. Additionally, when a load variation and a voltage variation are generated with a rapid rotation variation, a zero-cross point of the induced voltage waveform is hardly detected. That is, in the running state in which the relative position of rotor 105a cannot be recognized, the running of brushless DC motor 105 cannot be continued. As a result, unfortunately brushless DC motor 105 is out of synchronization and stops.

### Citation List

### Patent Literature

PTL 1: Japanese Unexamined Patent Publication No. 1-8890

### SUMMARY OF THE INVENTION

In accordance with an aspect of the present invention, an inverter control device includes a brushless DC motor, an inverter circuit unit, an output voltage controller, a position detection circuit unit, a position detection determination unit, a position detection commutation controller, and a forced synchronous commutation controller. The brushless DC motor includes a rotor in which a permanent magnet is provided and a stator in which a three-phase winding is provided. The inverter circuit unit drives the brushless DC motor. The output voltage controller controls an output voltage of the inverter circuit unit. The position detection circuit unit compares and detects an induced voltage of the brushless DC motor and a reference voltage generated by the output voltage of the inverter circuit unit. The position detection determination unit outputs a rotor position detection signal from a zero-cross point of an induced voltage waveform of the brushless DC motor based on an output signal of the position detection circuit unit. The position detection commutation controller outputs a commutation signal waveform of the inverter circuit unit based on the rotor position detection signal from the position detection determination unit. The forced synchronous commutation controller outputs a commutation signal waveform with an electric angle of less than 180 degrees at a predetermined frequency according to a target rotation speed of the brushless DC motor. The inverter control device operates by synchronous commutation, when the output voltage of the output voltage controller becomes an upper limit but does not reach the target rotation speed during an operation of position detection commutation.

Accordingly, in the case of the running state in which the zero-cross point of the induced voltage waveform cannot be detected, namely, the relative position of the rotor cannot be recognized, the commutation is forcedly continued by the drive waveform having the predetermined frequency based on the target rotation speed and the running rotation speed at that time. Therefore, the inverter output voltage can be changed according to the state of the inverter output voltage or the induced voltage phase with respect to the current phase while the running state of the motor is maintained. As a result, the stable motor operation can be performed during the synchronous running by the forced commutation.

In the inverter control device of the present invention, the running state of the motor can be continued by the forced synchronous drive, even if the inverter control device becomes the running state in which the magnetic pole position sensing of the running rotor is hardly performed due to causes such as an increase in target rotation speed and a variation in load torque, and even if the inverter output voltage by the forced synchronous drive becomes the upper limit. Additionally, the running range is expanded by an increase in output torque because of an effect to reduce the magnetic flux, the out-of-synchronization stop caused by the change of the motor running state is prevented to be able to continue the stable running operation.

### BRIEF DESCRIPTION OF DRAWINGS

FIG. 1 is a block diagram of an inverter control device according to a first exemplary embodiment of the present invention.
FIG. 2A is a timing chart illustrating a signal waveform and a processing content of each unit in the inverter control device of the first exemplary embodiment of the present invention.
FIG. 2B is a timing chart illustrating a signal waveform and a processing content of each unit in the inverter control device of the first exemplary embodiment of the present invention.
FIG. 3 is a flowchart illustrating a control operation in the inverter control device of the first exemplary embodiment of the present invention.
FIG. 4 is a view illustrating a configuration of a conventional inverter control device.
FIG. 5 is a view illustrating a signal waveform and a processing content of each unit in the conventional inverter control device.

### DESCRIPTION OF EMBODIMENT

Hereinafter, an embodiment of the present invention will be described with reference to the drawings. However, the present invention is not limited to the embodiment.

### (FIRST EXEMPLARY EMBODIMENT)

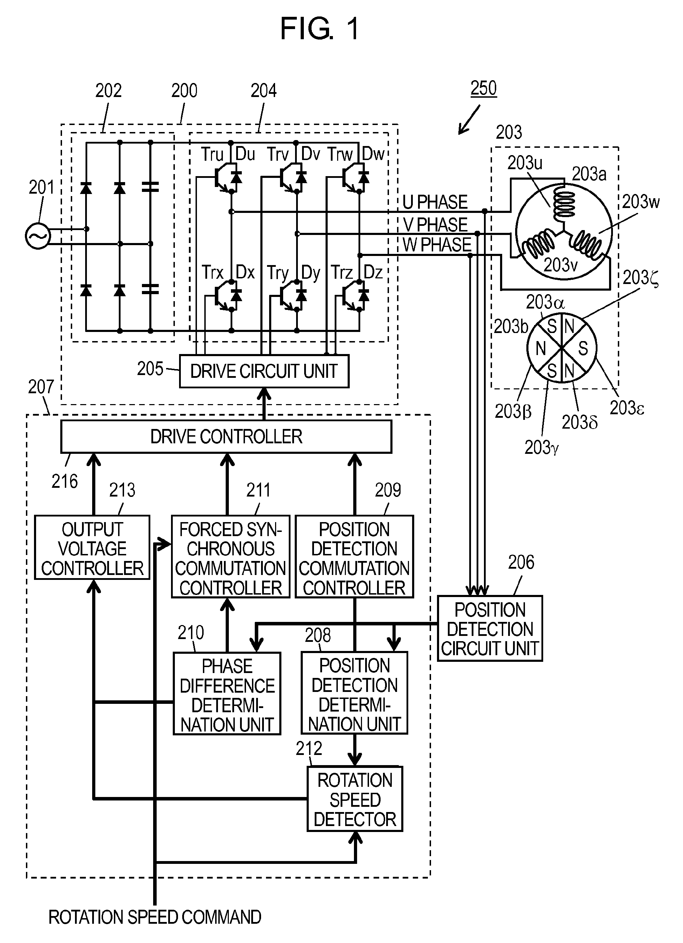

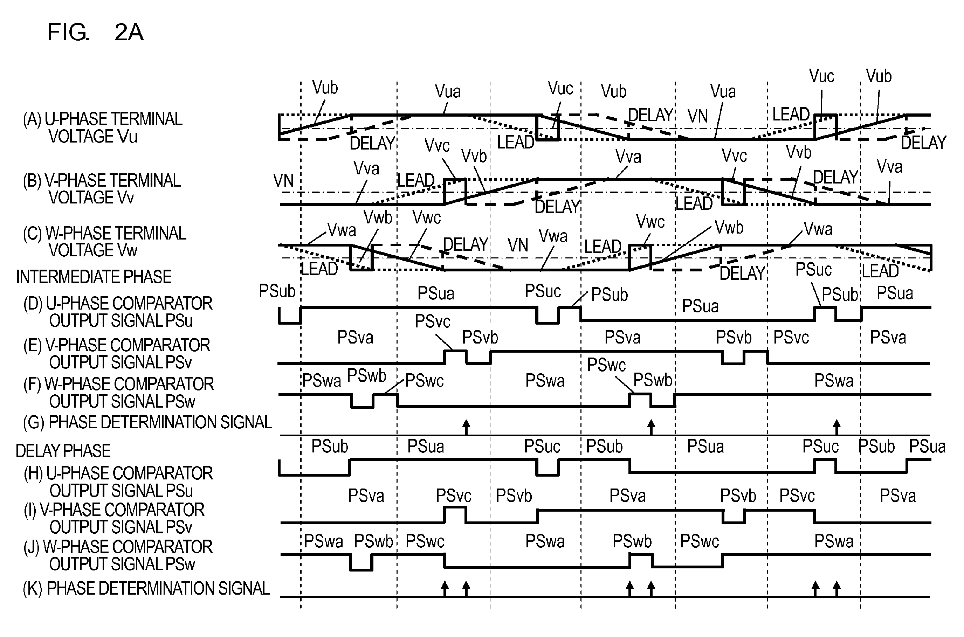

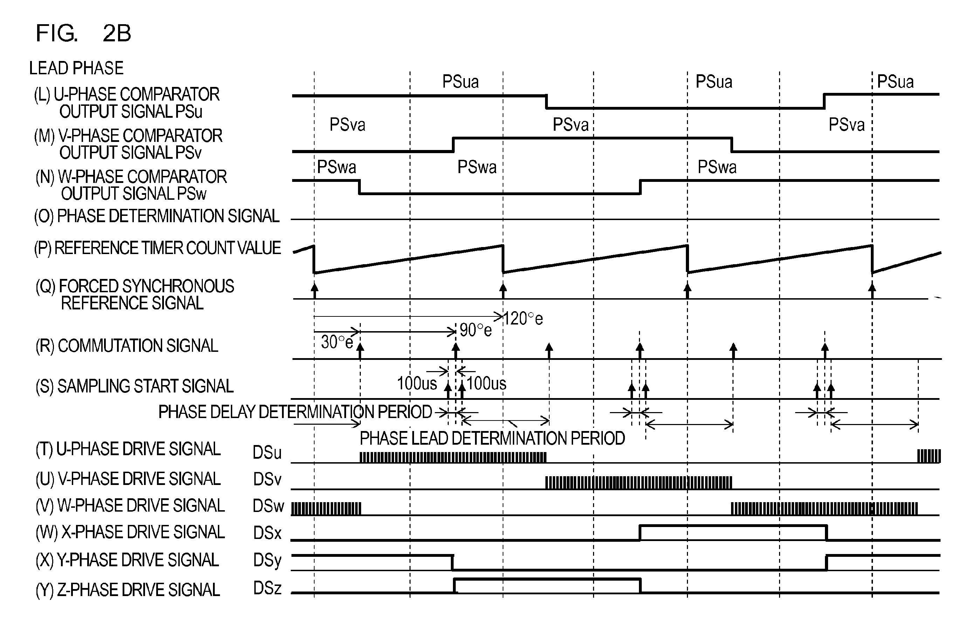

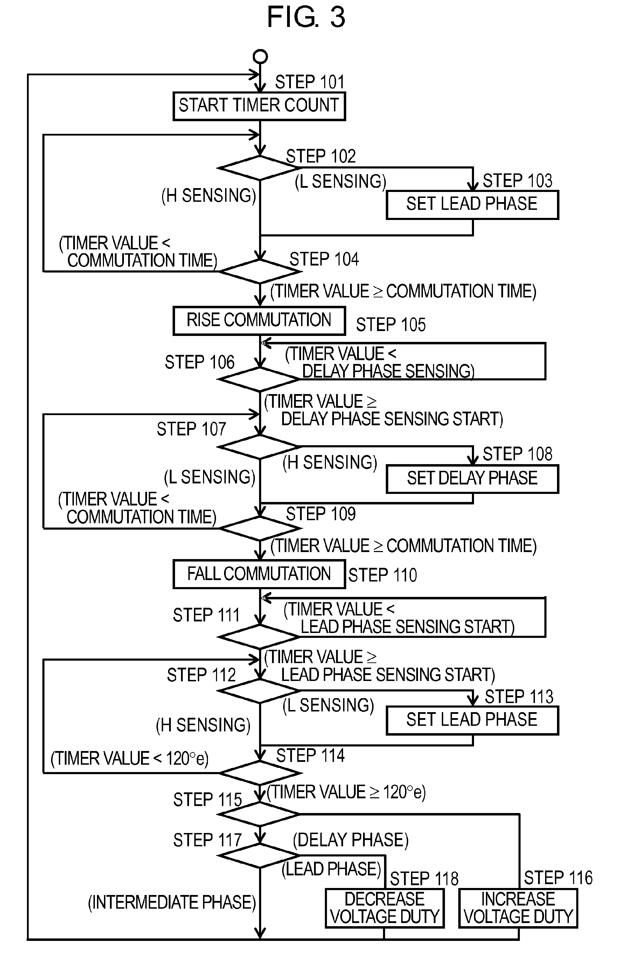

FIG. 1 is a block diagram of an inverter control device according to a first exemplary embodiment of the present invention. FIGS. 2A and 2B are timing charts illustrating a signal waveform and a processing content of each unit in the inverter control device of the first exemplary embodiment of the present invention. FIG. 3 is a flowchart illustrating a control operation in the inverter control device of the first exemplary embodiment of the present invention.

Referring to FIG. 1, inverter control device 250 is connected to commercial AC power 201 and an electric compressor (not illustrated).

Inverter control device 250 includes inverter device 200, brushless DC motor 203, position detection circuit 206, and microprocessor 207.

Inverter device 200 also includes rectifier 202, inverter circuit unit 204, and drive circuit unit 205. Rectifier 202 converts commercial AC power 201 into a DC power. Inverter circuit unit 204 drives brushless DC motor 203 of the electric compressor. Drive circuit unit 205 drives inverter circuit unit 204.

Inverter device 200 is connected to microprocessor 207. Position detection circuit unit 206 that detects a terminal voltage at brushless DC motor 203 inputs a signal to microprocessor 207, and microprocessor 207 controls inverter circuit unit 204.

Microprocessor 207 includes position detection determination unit 208 and position detection commutation controller 209. Position detection determination unit 208 detects a magnetic pole position of brushless DC motor 203 in response to the output signal from position detection circuit unit 206.

Position detection commutation controller 209 generates a commutation signal of inverter circuit unit 204 based on a position detection signal from position detection determination unit 208.

Microprocessor 207 also includes phase difference determination unit 210 and forced synchronous commutation controller 211. In response to the output signal from position detection circuit unit 206, phase difference determination unit 210 detects a phase difference of an induced voltage phase of brushless DC motor 203 to an output voltage phase of inverter circuit unit 204, and outputs a phase difference detection signal.

Forced synchronous commutation controller 211 generates a commutation signal based on the phase difference detection signal. That is, forced synchronous commutation controller 211 outputs a commutation signal waveform with an electric angle of less than 180 degrees at a predetermined frequency according to a target rotation speed of brushless DC motor 203.

Microprocessor 207 also includes rotation speed detector 212, output voltage controller 213, and drive controller 216. Rotation speed detector 212 calculates a rotation speed based on an output from position detection determination unit 208. Output voltage controller 213 performs PWM modulation to an output voltage based on the rotation speed and a rotation speed command or the phase difference. Drive controller 216 drives drive circuit unit 205 using the output of position detection commutation controller 209 or forced synchronous commutation controller 211.

Brushless DC motor 203 includes three-phase-winding stator 203a and rotor 203b.

Stator 203a includes stator windings 203u, 203v, and 203w. Rotor 203b has a magnet implanted structure in which permanent magnets 203α, 203β, 203γ, 203δ, 203ε, and 203ζ are disposed to generate a reluctance torque. Rotor 203b has saliency.

Inverter circuit unit 204 includes six switching transistors Thru, Trx, Trv, Try, Trw, and Trz that are connected in a three-phase-bridge manner and free-wheeling diodes Du, Dx, Dv, Dy, Dw, and Dz that are connected in parallel with one another.

Position detection circuit unit 206 includes a comparator (not illustrated) and the like. Position detection circuit unit 206 obtains the position detection signal by comparing a terminal voltage signal based on an induced voltage of brushless DC motor 203 to a reference voltage generated from the output voltage of inverter circuit unit 204 using the comparator.

Position detection determination unit 208 obtains a position signal of rotor 203b from a zero-cross point of an induced voltage waveform of brushless DC motor 203 based on the output signal of position detection circuit unit 206, and generates a rotor position detection signal.

Position detection commutation controller 209 calculates commutation timing using the position detection signal of position detection determination unit 208, and generates the commutation signals of switching transistors Thru, Trx, Trv, Try, Trw, and Trz.

Phase difference determination unit 210 generates the phase difference signal between the output voltage phase of inverter circuit unit 204 and the induced voltage phase generated in each of stator windings 203u, 203v, and 203w from the output signal of position detection circuit unit 206. Based on the phase difference, output voltage of output voltage controller 213 is changed, and the induced voltage phase of the brushless DC motor 203 is maintained at a predetermined phase with respect to the output voltage of inverter circuit unit 204.

Forced synchronous commutation controller 211 calculates the commutation timing in response to the rotation speed command, and generates the commutation signals of switching transistors Tru, Trx, Trv, Try, Trw, and Trz.

Rotation speed detector 212 calculates the rotation speed of brushless DC motor 203 using the position signal from position detection determination unit 208, and outputs a deviation between the rotation speed obtained from rotation speed detector 212 and a command rotation speed.

In response to a deviation signal of rotation speed detector 212 or a state of the phase difference signal of phase difference determination unit 210, output voltage controller 213 outputs the PWM modulation signal of the inverter output voltage to control the output voltage of inverter circuit unit 204.

In response to a PWM modulation duty value of output voltage controller 213 and a rotation speed deviation signal of rotation speed detector 212, drive controller 216 drives drive circuit unit 205 using one of the commutation signals of position detection commutation controller 209 and forced synchronous commutation controller 211.

Position detection commutation is switched to forced synchronous commutation, when the rotation speed deviation is continuously maintained at a predetermined value or more while the PWM modulation duty value of output voltage controller 213 is an upper limit. That is, inverter control device 250 operates by the synchronous commutation when the output voltage of output voltage controller 213 becomes the upper limit but does not reach the target rotation speed during the operation of the position detection commutation.

Drive controller 216 synthesizes the commutation signal of position detection commutation controller 209 or forced synchronous commutation controller 211 and the PWM modulation signal of output voltage controller 213, generates a drive signal that turns on and off switching transistors Tru, Trx, Trv, Try, Trw, and Trz, and outputs the drive signal to drive circuit unit 205.

Based on the drive signal, drive circuit unit 205 performs on/off switching of switching transistors Tru, Trx, Trv, Try, Trw, and Trz to drive brushless DC motor 203.

Various waveforms in FIGS. 2A and 2B of inverter control device 250 will be described below.

In FIGS. 2A and 2B, parts (A), (B), and (C) illustrate U-phase, V-phase, and W-phase terminal voltages Vu, Vv, and Vw of brushless DC motor 203, and U-phase, V-phase, and W-phase terminal voltages Vu, Vv, and Vw change while the U-phase, the V-phase, and the W-phase are deviated from one another by 120 degrees.

The terminal voltages become synthesized waveform of supply voltages Vua, Vva, and Vwa of inverter circuit unit 204, induced voltages Vub, Vvb, and Vwb generated in stator windings 203u, 203v, and 203w, and pulsed spike voltages Vuc, Vvc, and Vwc. Pulsed spike voltage Vuc, Vvc, and Vwc are generated by conducting a current through one of free-wheeling diodes Du, Dx, Dv, Dy, Dw, and Dz of inverter circuit unit 204 in switching the commutation.

Output signals PSu, PSv, and PSw are signals, which are output from the comparators (not illustrated) by comparing phase terminal voltages (values) Vu, Vv, and Vw to a virtual neutral point voltage (value) VN that is of 1/2 of the DC power supply voltage.

The output signals become synthesized signals of output signals PSua, PSva, and PSwa corresponding to supply voltages Vua, Vva, and Vwa, output signals PSuc, PSvc, and PSwc corresponding to spike voltages Vuc, Vvc, and Vwc, and output signals PSub, PSvb, and PSwb corresponding to a period during which induced voltages Vub, Vvb, and Vwb are compared to virtual neutral point voltage VN.

At this point, in the case that the induced voltage phase is an intermediate phase, parts (D), (E), and (F) illustrate output signals PSu, PSv, and PSw, and part (G) illustrates the state of the output signal of phase difference determination unit 210 at that time.

In the case that the induced voltage phase is a delay phase, parts (H), (I), and (J) illustrate output signals PSu, PSv, and PSw, and part (K) illustrates the state of the output signal of phase difference determination unit 210 at that time.

Similarly, in the case that the induced voltage phase is a lead phase, parts (L), (M), and (N) illustrate output signals PSu, PSv, and PSw, and part (O) illustrates the state of the output signal of phase difference determination unit 210 at that time.

Microprocessor 207 performs a count operation of a reference timer count value (part P) according to the target rotation speed, and generates a forced synchronous reference signal (part Q).

Based on the forced synchronous reference signal (part Q), the commutation signal (part R) and a sampling start signal (part S) are generated at regular time intervals, and drive signals DSu (part T) to DSz (part Y) are output according to the state of the commutation signal.

The detailed operation of the inverter control device 250 will be described below with reference to a flowchart in FIG. 3.

In FIG. 3, steps indicate operations of phase difference determination unit 210, forced synchronous commutation controller 211, and output voltage controller 213.

In Step 101, a reference timer starts a timer count of reference time corresponding to the electric angle of 120 degrees with respect to a target frequency.

At this point, Step 101 is a time point at which the forced synchronous reference signal (part Q) is generated, and corresponds to a phase lead determination period.

In Step 102, the states of output signals PSu, PSv, and PSw from position detection circuit unit 206 is detected, and a phase detection determination is made according to the states of output signals PSu, PSv, and PSw corresponding to the output states of switching transistors Tru, Trx, Trv, Try, Trw, and Trz, namely, the state of an operating mode in FIGS. 2A and 2B.

At this point, in an induced voltage rising period, the energization phase concerned becomes a non-energization state for a period corresponding to the electric angle of 60 degrees. Before and after the non-energization states of the U-phase, the V-phase, and the W-phase are started, lower-side drive signals DSx, DSy, and DSz are switched to upper-side drive signals DSu, DSv, and DSw, respectively.

In the case that the induced voltage is the lead phase while the output voltage of inverter circuit unit 204 is a rise waveform, during a phase lead detection period, the terminal voltage is not less than virtual neutral point voltage value VN, and the output of position detection circuit unit 206 does not become an 'L' signal. That is, when the output of position detection circuit unit 206 is detected as the 'L' signal, a determination that the induced voltage phase is not in the lead phase state is made, and the lead phase state is set in Step 103.

The flow returns to Step 102 to continue the lead phase sensing determination until the reference timer count value (part P) exceeds the commutation time, for example, the time corresponding to the electric angle of 30 degrees in Step 104. When the reference timer count value exceeds the commutation time, the flow goes to Step 105.

In Step 105, the commutation signal (part R) is generated, and upper-side drive signal DSu, DSv, or DSw is set to an on-state to perform the commutation operation according to the state of the U-phase, V-phase, or W-phase.

In Step 106, the inverter control device 250 is in a standby state until the reference timer count value (part P) exceeds a delay phase sensing start time.

In Step 106, the states of output signals PSu, PSv, and PSw from position detection circuit unit 206 are detected when the reference timer count value (part P) exceeds the delay phase sensing start time, for example, the time of 100 µs immediately before the time corresponding to the electric angle of 90 degrees. The phase detection determination is made according to the states of output signals PSu, PSv, and PSw corresponding to the output states of switching transistors Tru, Trx, Trv, Try, Trw, and Trz, namely, the state of the operating mode in FIGS. 2A and 2B.

In the case that the induced voltage is the delay phase while the output voltage of inverter circuit unit 204 is a fall waveform, because the terminal voltage is greater than virtual neutral point voltage value VN during a phase delay detection period, the output of position detection circuit unit 206 does not become an 'H' signal. That is, when the output of position detection circuit unit 206 is detected as the 'H' signal, the determination that the induced voltage phase is in the delay phase state is made, and the delay phase state is set in Step 108.

The flow returns to Step 107 to continue the delay phase sensing until the reference timer count value (part P) exceeds the commutation time in Step 109. When the reference timer count value exceeds the commutation time, the flow goes to Step 110.

In Step 110, the commutation signal (part R) is generated, and lower-side drive signal DSx, DSy, or DSz is set to the on-state to perform the commutation operation according to the state of the U-phase, V-phase, or W-phase.

In Step 111, the inverter control device 250 is in the standby state until the reference timer count value (part P) exceeds a lead phase sensing start time.

In Step 112, the states of output signals PSu, PSv, and PSw from position detection circuit unit 206 are detected when the reference timer count value (part P) exceeds the lead phase sensing start time, for example, the time of 100 µs immediately before the time corresponding to the electric angle of 90 degrees. The phase detection determination is made according to the states of output signals PSu, PSv, and PSw corresponding to the output states of switching transistors Tru, Trx, Trv, Try, Trw, and Trz, namely, the state of the operating mode in FIGS. 2A and 2B.

In Steps 112 and 113 that are of a lead phase determination period, the lead phase sensing of the induced voltage is performed like Steps 102 and 103.

The flow returns to Step 112 to continue the lead phase sensing until the reference timer count value (part P) exceeds the reference time, for example, the time corresponding to the electric angle of 120 degrees in Step 114. When the reference timer count value exceeds the commutation time, the flow goes to Step 115.

When the reference timer count value (part P) exceeds the reference time in Step 114, the flow goes to Step 115.

In Step 115, the delay phase state is determined, the output of the comparator of the phase concerned is maintained in an 'H' state immediately before the lower-side drive signal is output. When the phase of the induced voltage becomes the extreme delay phase state in Step 115, output voltage controller 213 increases an output duty of a voltage PWM control signal by a given value in Step 116.

After Step 116, the flow returns to Step 101 to repeat the similar operation.

On the other hand, when the induced voltage is not in the delay phase state in Step 115, the flow goes to Step 117.

In Step 117, the lead phase state is determined, and the output of the comparator of the phase concerned is maintained in the 'H' state immediately before the upper-side drive signal is output. When the phase of the induced voltage becomes the extreme lead phase state in Step 117, output voltage controller 213 decreases the output duty of the voltage PWM control signal by a given value in Step 118.

After Step 118, the flow returns to Step 101 to repeat the similar operation.

That is, in the control, phase terminal voltages (values) Vu, Vv, and Vw of brushless DC motor 203 and virtual neutral point voltage (value) VN that is of 1/2 of the DC power supply voltage are compared to determine the phase difference between each phase output voltage phase by the commutation operation of inverter circuit unit 204 and the induced voltage generated in the stator winding by a change in rotor magnetic flux. As a result of the determination, the inverter circuit output voltage is increased when the induced voltage phase is delayed with respect to the inverter output voltage phase. On the other hand, the inverter circuit output voltage is decreased when the induced voltage phase leads the inverter output voltage phase.

Accordingly, the inverter output voltage changes according to the state of the induced voltage phase with respect to the inverter output voltage even if the running state of brushless DC motor 203 changes by causes such as the variation in load torque and the change in target rotation speed. Therefore, during the synchronous running by the forced commutation of brushless DC motor 203, the loss-of-synchronization stop caused by the excess or deficiency of the motor output torque is prevented to be able to perform the stable motor operation.

Additionally, the reluctance torque can effectively be used by the configuration in which permanent magnets 203α, 203β, 203γ, 203δ, 203ε, and 203ζ are disposed in rotor 203b. Therefore, in a running marginal region by sensorless drive, the current phase is set to the lead phase by the synchronous commutation to enable the reluctance torque to be increased, and the running range can further be expanded at the output voltage upper limit.

As described above, the rotation of brushless DC motor 203 can be controlled with high reliability, the good running can be performed when inverter control device 250 of the first exemplary embodiment is used in the compressor.

In such an article reservoir instrument as a refrigerator including a refrigeration cycle (not illustrated) in which an electric compressor, a condenser, a decompression device, and an evaporator are circularly coupled by pipe fitting, the electric compressor may be driven and controlled by the inverter control device 250 of the first exemplary embodiment. Therefore, the good system running can be achieved, and an article storage temperature of the article reservoir instrument can be stabilized to enhance the reliability of article storage.

As described above, inverter control device 250 of the present invention includes brushless DC motor 203, inverter circuit unit 204, output voltage controller 213, position detection circuit unit 206, position detection determination unit 208, position detection commutation controller 209, and forced synchronous commutation controller 211. Brushless DC motor 203 includes rotor 203b in which the permanent magnets are provided and stator 203a in which the three-phase winding is provided. Inverter circuit unit 204 drives brushless DC motor 203. Output voltage controller 213 controls the output voltage of inverter circuit unit 204. Position detection circuit unit 206 compares and detects the induced voltage of brushless DC motor 203 and the reference voltage generated by the output voltage of inverter circuit unit 204. Position detection determination unit 208 outputs the rotor position detection signal from the zero-cross point of the induced voltage waveform of brushless DC motor 203 based on the output signal of position detection circuit unit 206. Position detection commutation controller 209 outputs the commutation signal waveform of inverter circuit unit 204 based on the output signal from position detection determination unit 208. Forced synchronous commutation controller 211 outputs the commutation signal waveform with the electric angle of less than 180 degrees at the predetermined frequency according to the target rotation speed of brushless DC motor 203. Inverter control device 250 operates by the synchronous commutation when the output voltage of output voltage controller 213 becomes the upper limit but does not reach the target rotation speed during the operation of the position detection commutation.

Accordingly, the frequency of the output current of inverter circuit unit 204 is forcedly output at the synchronous frequency. Therefore, the current phase becomes the lead phase relative to the induced voltage phase when the rotor phase, namely, the induced voltage phase is delayed with respect to the current phase by the increase in load torque. The lead phase current reduces the stator magnetic flux to decrease induced voltage, whereby the motor current is increased to increase the output torque. As a result, the running range can be expanded.

Inverter control device 250 also includes phase difference determination unit 210. Based on the signal of position detection circuit unit 206, phase difference determination unit 210 detects the phase difference of the induced voltage phase of brushless DC motor 203 to the output voltage phase of inverter circuit unit 204. Based on the phase difference, phase difference determination unit 210 changes the output voltage of inverter circuit unit 204 using output voltage controller 213, and maintains the induced voltage phase of the brushless DC motor 203 at the predetermined phase with respect to the output voltage of inverter circuit unit 204. Even in the operation by the synchronous commutation, inverter control device 250 changes the output voltage of inverter circuit unit 204 according to the change in state of the induced voltage phase of brushless DC motor 203, thereby continuing the running state of brushless DC motor 203.

Accordingly, the inverter output voltage is changed according to the inverter output voltage or the state of the induced voltage phase with respect to the current phase, which allows the stable motor operation to be performed compared with the synchronous running by the forced commutation.

In inverter control device 250, rotor 203b of brushless DC motor 203 is configured to have the saliency in which the permanent magnets are implanted in rotor 203b.

Accordingly, in the running marginal region by the sensorless drive, the current phase is set to the lead phase by the synchronous commutation to enable the reluctance torque to be increased. Therefore, the running range can further be expanded even in the output voltage upper limit.

An electric compressor of the present invention includes inverter control device 250.

Accordingly, the running can efficiently be performed in a low rotation speed region of brushless DC motor 203, and the running can be performed with the high torque in a high rotation speed region. Therefore, the high-reliability electric compressor that follows the load variation of the refrigeration cycle can be provided.

An electric instrument of the present invention includes the electric compressor.

Accordingly, the high-efficiency and wide-running-range electric instruments, such as the household refrigerator, which perform high-reliability drive control can be provided. The control is properly performed according to the wide load to stabilize the article storage temperature of the article reservoir instrument, which allows the enhancement of the reliability of the article storage.

### INDUSTRIAL APPLICABILITY

As described above, because the running operation can stably be continued, the inverter control device of the present invention can be applied to household electric appliances, such as an air conditioner, a refrigerator, and a washing machine, in which the load variation and the voltage variation are generated.

### REFERENCE MARKS IN THE DRAWINGS

- 200: inverter device
- 203: brushless DC motor
- 203b: rotor
- 203α, 203β, 203γ, 203δ, 203ε, 203ζ: permanent magnet
- 203u, 203v, 203w: stator winding
- 204: inverter circuit unit
- 206: position detection circuit unit
- 208: position detection determination unit
- 209: position detection commutation controller
- 210: phase difference determination unit
- 211: forced synchronous commutation controller
- 213: output voltage controller
- 250: inverter control device

## Claims

1. An inverter control device comprising:
a brushless DC motor that includes a rotor in which a permanent magnet is provided and a stator in which a three-phase winding is provided;
an inverter circuit unit that drives the brushless DC motor;
an output voltage controller that controls an output voltage of the inverter circuit unit;
a position detection circuit unit that compares and detects an induced voltage of the brushless DC motor and a reference voltage generated by the output voltage of the inverter circuit unit;
a position detection determination unit that outputs a rotor position detection signal from a zero-cross point of an induced voltage waveform of the brushless DC motor based on an output signal of the position detection circuit unit;
a position detection commutation controller that outputs a commutation signal waveform of the inverter circuit unit based on the rotor position detection signal from the position detection determination unit; and
a forced synchronous commutation controller that outputs a commutation signal waveform with an electric angle of less than 180 degrees at a predetermined frequency according to a target rotation speed of the brushless DC motor,
wherein the inverter control device operates by synchronous commutation when the output voltage of the output voltage controller becomes an upper limit but does not reach the target rotation speed during an operation of position detection commutation.

2. The inverter control device according to claim 1, further comprising a phase difference determination unit that detects a phase difference of an induced voltage phase of the brushless DC motor to an output voltage phase of the inverter circuit unit based on a signal of the position detection circuit unit, changes the output voltage of the inverter circuit unit using the output voltage controller based on the phase difference, and maintains the induced voltage phase of the brushless DC motor at a predetermined phase with respect to the output voltage of the inverter circuit unit,
wherein, in the operation by the synchronous commutation, the output voltage of the inverter circuit unit is changed according to a change in state of the induced voltage phase of the brushless DC motor to continue a running state of the brushless DC motor.

3. The inverter control device according to claim 1, wherein the rotor of the brushless DC motor is configured to have saliency in which the permanent magnet is implanted in the rotor.

4. An electric compressor comprising the inverter control device according to any one of claims 1 to 3.

5. An electric instrument comprising the electric compressor according to claim 4.
